# EUROPEAN PATENT SPECIFICATION

(11) **EP 4 059 699 B1**
(45) Date of publication and mention of the grant of the patent: **10.09.2025**
(21) Application number: 21163491.0
(22) Date of filing: 18.03.2021
(51) Int. Cl.: B29C 65/16, B29K 101/12, B29K 705/02, B29L 9/00, B29L 31/34

(54) **LASER WELDING APPARATUS AND METHOD OF LASER WELDING**
LASERSCHWEISSVORRICHTUNG UND VERFAHREN ZUM LASERSCHWEISSEN
APPAREIL DE SOUDAGE AU LASER ET PROCÉDÉ DE SOUDAGE AU LASER

(43) Date of publication of application: 21.09.2022
(73) Proprietor: TRUMPF Photonic Components GmbH, 89081 Ulm (DE)
(72) Inventor: CONRADS, Ralf, 47906 Kempen (DE); OGIEWA, Felix, 52064 Aachen (DE)
(74) Representative: Trumpf Patentabteilung

(56) References cited:
- EP-A1- 2 724 840
- IT-A1- UB20 160 447
- US-A1- 2013 025 793

## Description

### FIELD OF THE INVENTION

The present invention relates to the field of laser welding of workpieces comprising plastic components, in particular plastic foils. More particularly, the present invention relates to a laser welding apparatus suitable for welding a workpiece in a welding zone and a related method of laser welding a workpiece. The laser welding apparatus and the method according to the invention are especially suitable in the manufacturing of pouch cells.

### BACKGROUND

Welding of thermoplastics comprises a process of uniting softened surfaces of the thermoplastics, generally with the aid of heat. The welding process conventionally includes application of heat and pressure, and cooling. The plastic foils to be welded to one another may be of single layer structure in the simplest case, or at least one of the welding components may comprise a layer structure of two or more layers laminated onto one another.

In the manufacturing of pouch cells, plastic foil welding is typically used to hermetically close and seal one or more open ends or rims of the pouch. A pouch cell is a type of battery which comprises staggered or folded active layers which are enclosed by a flexible outer pouch or bag comprising thermoplastic material. The open end or ends of the pouch is/are thermally welded while the metal electrodes protrude from the interior of the pouch to the exterior of the pouch through the welded end or ends of the pouch. Further, the pouch of a pouch cell typically comprises a layer structure of several layers of plastic foils and at least one metallic layer sandwiched between the plastic layers to provide a diffusion barrier which prevents substances from diffusing from the interior to the exterior of the pouch or vice versa.

In conventional methods of welding the open end or ends of the pouch, heated metal clamping jaws are used. In case of welding multi-layer plastic workpieces, the innermost plastic layers to be welded to one another have to be fused under pressure. If the fusion of the innermost plastic layers is performed using heated metallic clamping jaws, the required heat must be introduced through the outer plastic layers up to the innermost plastic layers via heat conduction. If the multi-layer structure includes a metallic intermediate layer or layers, the heat must also be transmitted through the intermediate metallic layer(s). The maximum allowable temperature of the outer plastic layers limits the temperature of the clamping jaws and thus the heat introduction, and thereby increases the processing time. By virtue of the comparably long processing time and different heat capacities of the layers in the layer structure, the welding may not be as uniform along the welding zone as desired.

It is to be understood that the present invention is not limited to the welding of pouch cells, but can be used in many other applications in which thermoplastic workpieces have to be welded.

US 2006/0237401 A1 discloses a laser welding system including a free-spacing beam delivery laser head having a linear array at least two laser diodes. The laser head is arranged remote from the workpiece to be welded. A plurality of lenses are placed in predetermined distance from the laser diodes, each of the lenses adapted to focus the respective laser beam into a focus laser beam segment, thereby forming a continuous line of laser energy from a substantially serial combination of each focus laser beam segment. The workpiece to be welded has a first component and at least one other component to be welded to the first component, wherein the first component is substantially transmissive to the laser wavelength, the other component being substantially absorptive of the laser wavelength. This type of laser welding is also referred to as laser transmission welding, where the laser light is focused onto the interface between the plastic layers to be welded to one another.

US 2013/0025793 A1 discloses a laser welding system according to the preamble of claim 1. This laser welding apparatus for welding a first thermoplastic membrane to a second thermoplastic membrane, wherein at least the first thermoplastic membrane or the second thermoplastic membrane is absorbent, comprises at least one die including a plurality of laser diodes for emitting a laser beam forming direct, simultaneous and uniform illumination on the illumination surface of the first thermoplastic membrane.

EP 2 724 840 A1 discloses a welding apparatus for welding at least two layers of material of a workpiece, comprising a welding tool, which includes a first tool part and a second tool part which are movable relative to one another and form a welding gap for receiving and welding the workpiece, wherein the welding gap may be varied in size. The apparatus further comprises a welding energy source for providing welding energy and an adjustment device for moving at least one of the tool parts. The first and/or the second tool part is connected with the welding energy source. The welding tool is assigned an energy converting device connected with a control device and with an energy source and which is configured for contactless coupling of welding energy into the workpiece.

IT UB20 160 447 A1 discloses a laser welding apparatus.

### SUMMARY

It is an object of the present invention to provide a laser welding apparatus and laser welding method which are suitable for welding multi-layer plastic workpieces.

It is a further object of the present invention to provide a laser welding apparatus and laser welding method which are suitable for welding multi-layer plastic workpieces which comprise at least one intermediate layer non-transparent to the laser light which is arranged spaced apart from plastic layers to be welded to one another.

It is a further object of the present invention to provide a laser welding apparatus and a laser welding method which are suitable for welding an open end of a pouch cell through which a metal electrode protrudes.

According to a first aspect, a laser welding apparatus according to the claimed invention for welding a workpiece in a welding zone is defined in claim 1.

Instead of using heated metal clamping jaws from which heat is introduced into the workpiece to be welded, the laser welding apparatus according to the invention uses at least one transparent clamping jaw through which laser light of a suitable wavelength is irradiated into the workpiece along the welding zone. A suitable wavelength of the laser light emitted by the laser diodes is within the infrared wavelength range, e.g. the range from 750 nm to 1,500 nm. If the workpiece to be welded has a multi-layer structure, with at least one intermediate layer which is non-transparent to the laser light, the laser light heats the intermediate layer by absorption. For example, the intermediate layer may be a metallic layer sandwiched between plastic layers which are more or less transparent to the laser light. An advantage of the laser welding apparatus according to the invention is that the plastic layers arranged between the non-transparent intermediate layer and the transparent body will not be heated or at least not heated significantly so as to be damaged. From the non-transparent intermediate layer, the heat generated in the intermediated layer propagates by heat conduction through the subsequent plastic layers to the innermost thermoplastic layer which is to be welded with an adjacent thermoplastic layer of the same workpiece or of another workpiece.

The transparent body not only transmits the laser light into the workpiece, but is advantageously also used to provide the pressure required for pressing, in cooperation with e.g. a second clamping jaw, along the welding zone. Preferably, the transparent body is a single-piece transparent body.

If the welding zone is an elongated welding zone and defines a longitudinal axis, the transparent body preferably extends along the longitudinal axis and has an elongated shape. For example, the transparent body may be configured as an elongated transparent rod arranged along the longitudinal direction of the welding zone. The transparent body may be a solid body of transparent material, or a hollow body, e.g. filled with air. The clamping surface of the transparent body may be planar. If the welding zone is elongated and has a width perpendicular to the long dimension of the welding zone, the clamping surface may have a width which is adapted to the width of the welding zone. The latter may have a geometry of an elongated stripe.

The array of laser diodes and the transparent body are arranged in proximity to each other, i.e. with or without a gap between them, wherein a gap of several millimeters up to a few centimeters is possible. Thus, the array of laser diodes and the transparent body provide or form a very compact and integrated design of the clamping jaw.

The laser welding apparatus according to the invention is particularly suitable for welding the open ends of pouches of pouch cells in hermetically sealed fashion.

The apparatus comprises a second clamping jaw opposite to the first clamping jaw and arranged to clamp the workpiece in cooperation with the clamping surface of the preferably elongated transparent body of the first clamping jaw along the welding zone, wherein the second clamping jaw comprises a further preferably two-dimensional array of laser diodes arranged to emit laser light and a further preferably elongated transparent body arranged to receive and transmit the laser light, wherein the further array of laser diodes is arranged in proximity to the further transparent body, wherein the transparent body and the further transparent body are arranged to clamp the workpiece therebetween. This configuration is particularly advantageous for welding a pouch of a pouch cell, because the welding zone spans over one or more metal electrodes protruding from the open end of the pouch to be welded. If the welding zone would only be irradiated with light from one side, the heat generated in the workpiece could be insufficient for fusing the innermost plastic layers to one another, as some amount of heat may be discharged from the welding zone by the metal electrode(s). The light emitting area of the second clamping jaw may be smaller than the light emitting area of the first clamping jaw, and in particular may be limited to the region where higher energy introduction to the workpiece is required. Power consumption may be reduced in this way.

Preferred and advantageous embodiments are defined in the dependent claims and indicated below.

In an embodiment, the array of laser diodes may be two-dimensional, wherein sub-arrays of the laser diodes preferably are individually addressable to adjust an intensity distribution along the welding zone.

A two-dimensional array of laser diodes is advantageous, as it can provide much more laser light intensity and power density than a single row of laser diodes. The two-dimensional array of laser diodes may be a planar array. The laser diodes may be arranged in rows and columns. The transparent body may have a width at a side facing the laser diode array, which is adapted to the width of the laser diode array so as to collect as much light as possible from the laser diode array.

Preferably, sub-arrays of the laser diodes are individually addressable to adjust an intensity distribution along the welding zone. It is advantageous here that the light intensity introduced into the workpiece can be adjusted in accordance with the structure, including the material structure, of the workpiece along the welding zone. For example, in case of welding an open end of a pouch of a pouch cell through which one or more metal electrodes protrude, there might be some higher intensity advantageous in the region along the welding zone where the metal electrode(s) protrude(s) from the open end of the pouch, because the metal electrode(s) might conduct some amount of heat away from the welding zone. The two-dimensional array of laser diodes may comprise a plurality of two-dimensional sub-arrays, wherein it is also possible, that one sub-array comprises only one laser diode. The two-dimensional array of laser diodes may emit laser light with a total power density of up to several hundred W/cm². By addressing only sub-arrays of the laser diodes, the power density can be reduced in certain regions along the welding zone where a reduced heat generation is desired. "Individually addressable" here means, that the laser diodes of the sub-arrays may be switched on or off independent of the laser diodes of other sub-arrays, and/or the intensity of the laser light emission can be increased or decreased in one or more of the sub-arrays independent of other sub-arrays by a suitable control of the laser module.

Thus, the light energy introduction into the workpiece may be profiled in time and space over the welding zone, and can be adapted to the locally distributed thermal masses and heat losses. The uniformity of the welding seam can thus be significantly improved.

Preferably, the transparent body is arranged to bundle the laser light passing through the transparent body such that a laser light bundle exiting the transparent body has a reduced area in a cross-section perpendicular to the propagation direction of the laser light, in comparison with a cross-section of the laser light bundle incident on the transparent body. This embodiment is advantageous if the array of laser diodes is two-dimensional, as the two-dimensional array of laser diodes may have a light emitting area which is larger than the area of the welding zone to be irradiated with the laser light. Thus, a higher power density in the welding zone may be achieved for a fast welding process. The transparent body may collect the laser light from the two-dimensional array of laser diodes and bundle the radiation onto the opposite surface of the transparent body, in particular the clamping surface of the transparent body. "Bundle" does not necessarily mean that the laser light is focused onto the clamping surface.

Preferably, the laser light may be transformed by the transparent body into a laser light line or stripe extending along the welding zone and may have a width perpendicular to the propagation of laser light which is adapted to the width of the welding zone.

The transparent body may be configured as a substantially cylindrical rod with a convex surface facing the array of laser diodes. Other shapes than a cylindrical surface of the transparent body are possible, for example an elliptical surface shape or the like. In further embodiments, the transparent body may be configured as a compound parabolic concentrator which may be terminated on the light entry side and on the light exit side with a planar face.

Preferably, the transparent body may comprise a projecting ridge having a front surface forming the clamping surface of the transparent body. In a further embodiment, the ridge may have a projecting elongated shape extending along the longitudinal axis.

The ridge provides a well-defined contact or clamping surface of the transparent body at its side facing the workpiece to be welded. In combination with the afore-mentioned embodiment, according to which the transparent body is configured to bundle the laser light emitted by the array of laser diodes, it is advantageous if the bundled light fills the ridge and emerges from the ridge into the workpiece. In particular, the cross-section of the laser light bundle exiting the transparent body may have a width which is equal to the width of the ridge in a direction perpendicular to the light propagation direction. The width of the ridge in turn may be adapted to the width of the welding zone.

Preferably, the transparent body may have a non-transmissive surface in regions immediately adjacent to the clamping surface. It is advantageous here that the laser light emerging from the transparent body into the workpiece is limited to the clamping surface, or, in combination with the afore-mentioned embodiment, to the ridge, and in particular to the welding zone. The area of energy supply into the workpiece is thus well-defined. The surface of the transparent body can be made non-transmissive by an absorbing, or more preferably by a reflective coating, which may be applied to the transparent body by vapor deposition, for example.

Preferably, the clamping surface of the transparent body may have a contour along its length which comprises different height levels along the length of the clamping surface. Different height levels may be realized by one or more recesses, indentations, or elevations along the clamping surface. Such a profiling of the clamping surface may be advantageous in case the workpiece to be welded has a profiled surface along the welding zone. For example, in case of use of the laser welding apparatus for welding a pouch of a pouch cell, the protruding metal electrode(s) may cause an uneven surface topology of the end of the pouch to be welded, due to the thickness and incompressibility of the metal electrode. By profiling the clamping surface, the clamping force provided by the clamping surface of the transparent body may thus be uniformly distributed along the welding zone.

In further embodiments, the clamping surface of the transparent body may be flexible or resilient so as to adapt itself to the surface topology of the workpiece surface.

Preferably, the first clamping jaw comprises a holding frame for holding the transparent body, wherein the holding body is arranged to dissipate heat from the transparent body. The laser module comprising the laser diode array may also be mounted on the holding frame. During use of the laser welding apparatus, the transparent body may be heated by the high intensity laser light transmitted through the transparent body. It is advantageous to avoid an excessive heating of the transparent body as it is in contact with the surface of the workpiece to be welded, wherein the surface of the workpiece might be sensitive to over-heating, for example if the surface is a thin plastic foil with a low melting point. In the present embodiment, the holding body of the clamping jaw advantageously serves as a heat sink for the transparent body so that the transparent body may be sufficiently cooled by the holding body of the clamping jaw. The holding body may be made of a material with high heat conducting capability, e.g. a metal.

Further heat management measures may be provided in that the transparent body is made of a heat conducting material and/or comprises interior channels for receiving a cooling fluid. These heat management measures may advantageously further reduce the heat load onto the transparent body. In case the transparent body is a solid body, the transparent body may be made of or comprise sapphire which is a good heat conductor.

Preferably, the laser diodes are vertical cavity surface emitting lasers (VCSELs). VCSELs are cheap laser diodes with high conversion efficiency and output power. VCSELs are advantageous in providing the high intensity level of the laser light which is suitable for the welding process.

According to a further aspect of the claimed invention, a method of laser welding a workpiece in a welding zone is provided as defined in claim 11.

The method according to the further aspect has the same or similar advantages and embodiments as the laser welding apparatus according to the first aspect. Further embodiments and advantages of the method according to the second aspect are indicated below.

Preferably, the method further comprises controlling the laser diodes to adjust an intensity distribution of the laser light along the welding zone. Controlling the laser diodes may include controlling sub-arrays of the laser diodes. Controlling the laser diodes may include switching on or switching off sub-arrays of the laser diodes and/or controlling the driving current supplied to the sub-arrays of laser diodes independently from other sub-arrays to adjust the output power to different levels among the sub-arrays.

Preferably, the workpiece to be welded comprises a layer structure of laminated layers comprising plastic layers transparent to the laser light, and one or more non-transparent layers embedded between the transparent layers. The layer structure may comprise a plurality of plastic layers of different materials, which are transparent to the laser light, and the one or more non-transparent layers embedded between the transparent layers may be light absorbing layers to generate heat, e.g. metallic layers or layers comprising an absorptive additive. In case of one or more metallic intermediate layers these may be aluminum layers. In particular the workpiece may have a layer structure typically used in the manufacturing of a pouch of a pouch cell.

Preferably, the method may further comprise transmitting the laser light from the transparent body through one or more first transparent layers to the non-transparent layer to heat the non-transparent layer and transfer the heat from the non-transparent layer to one or more underlying layers. Thus, the laser light does not directly fuse the plastic layer(s) to be welded, but the light energy is used to heat a non-transparent layer from which the heat is conducted to the plastic layer or plastic layers to be welded to one another.

Preferably, the workpiece is a pouch of a pouch cell comprising a metal electrode projecting from a part of a rim of the pouch cell, wherein the welding zone extends along the rim and over the metal electrode.

In an embodiment, the multi-layer structure of the workpiece may be provided with an additional absorbing layer at defined positions in the layer structure in order to introduce power at defined locations in the workpiece. For example, the intermediate non-transparent aluminum layer of the pouch may be provided with an additional infrared light absorbing layer which increases the absorption from about 20% to more than 50%, thus multiplying the energy efficiency of the welding process without the need for a high power laser module.

In a further embodiment, the transparent body of the first clamping jaw and/or the further transparent body of the second clamping jaw may be protected by a thin, flexible and transparent separation layer. The separation layer may be adapted to avoid that plastic parts of the workpiece stick at the first and/or second clamping jaw. For example, the separation layer may be a polyamide foil comprising a silicone-based glue for adhering the polyamide foil onto the first and/or second clamping jaw. Polyamide and silicone-based glue are transparent in the infrared wavelength range and resists power densities of several hundred W/cm² without damage. Such an adhesive foil could be exchanged at regular intervals in an automated manner on the clamping jaw(s).

Further advantageous embodiments are defined below.

### BRIEF DESCRIPTION OF THE DRAWINGS

These and other aspects of the invention will be apparent from and elucidated with reference to the embodiments described hereinafter with reference to the drawings. In the drawings:
- Fig. 1: shows a pouch cell in a plan view as an example of a workpiece which can be welded using a laser welding apparatus according to the present invention;
- Fig. 2: shows a layer structure of the pouch of the pouch cell in Fig. 1 in cross-section and in an exaggerated scale;
- Fig. 3: shows an embodiment of a laser welding apparatus in a perspective view, wherein clamping jaws of the laser welding apparatus are closed;
- Fig. 4: shows a front view of the laser welding apparatus in Fig. 3, wherein the clamping jaws are opened;
- Fig. 5: shows a cross-section of the laser welding apparatus in Fig. 4, wherein the clamping jaws are closed again, wherein the cross-section is taken along line V-V in Fig. 4;
- Fig. 6: shows a schematic plan view of a laser diode array of the laser welding apparatus;
- Fig. 7: shows a cross-section of a transparent body of the laser welding apparatus;
- Fig. 8: shows the transparent body in Fig. 7 in a perspective view;
- Fig. 9: shows a simulation of the bundling of laser light by the transparent body in a cross-sectional view;
- Fig. 10: shows the light intensity distribution along the transparent body; and
- Fig. 11: shows a light intensity distribution of the first and second clamping jaws along a welding zone.

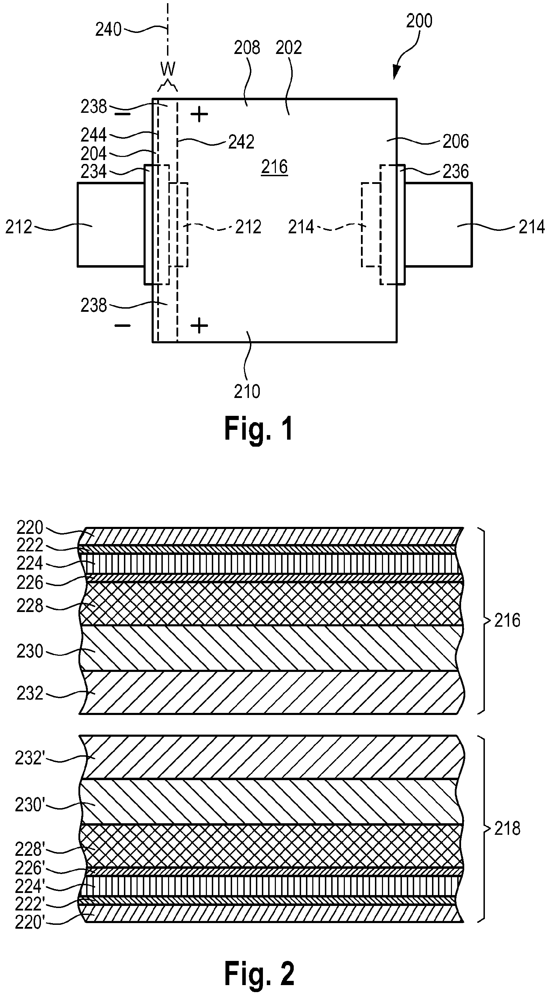

Before a laser welding apparatus according to the principles of the present invention will be described, an example of a workpiece which can be welded with a laser welding apparatus according to the principles of the present invention is described first, with reference to Figs. 1 and 2. As an example of a workpiece which can be welded with a laser welding apparatus according to the principles of the present invention, Fig. 1 shows a pouch cell 200. The pouch cell 200 comprises a flexible pouch 202 comprising thermoplastic material which may be configured as a tube having ends 204 and 206. Ends 204 and 206 are still open and are to be welded to close the pouch 202 in a hermetically sealed fashion. At lateral sides 208 and 210, the pouch 202 is already hermetically closed due to the tubular design of the pouch 202. In the interior of the pouch 202, staggered or folded active layers may be arranged (not shown) which are enclosed by the pouch 202. Metal electrodes 212 (e.g. n-electrode) and 214 (e.g. p-electrode) protrude from the interior of the pouch 202 through the ends 204 and 206 to the exterior of the pouch 202.

With reference to Fig. 2, an exemplary layer structure of the pouch material of the pouch 202 is shown. Fig. 2 shows the layer structure of an upper side 216 and of a lower side 218 of the pouch 202 which is not visible in Fig. 1. The layer structure of the lower side 218 is mirrored with respect to the layer structure of the upper side 216 due to the configuration of the pouch 202 as a tube. In Fig. 2, the layers of the lower side 218 of the pouch 202 are denoted with the same reference numerals as the layers of the upper side 216, added by a prime (').

The layer structure of the pouch 202 is a multi-layer structure, comprising a plurality of layers 220 to 232. Layers 220, 222, 224, 226, 230, 232 are plastic layers which are at least transparent at a wavelength in a wavelength range in the infrared spectrum. Layer 228 is a non-transparent layer, in particular a metal layer, e.g. an aluminum layer which serves as a diffusion barrier in the layer structure of the pouch 202. Layers 220 to 232 are laminated to one another. The layer thickness of the layers 220 to 232 is shown highly exaggerated in Fig. 2. The layers are a few microns to a few tens microns thick. As an example, layer 220 may be a PET-layer, layer 222 may be an adhesive layer, layer 224 may be an O-Ny layer, layer 226 may be an adhesive layer, layer 228 may be an aluminum layer, layer 230 may be a PPa layer, and the innermost layer 232 may be PP layer. The non-transparent layer 228 may be covered, locally or entirely, with an additional infrared light absorbing layer on its side facing the layer 226. In view of the different materials, heat capacities and maximum allowable temperatures of the layers 220 to 232 differ among the layers.

With reference to Fig. 1 again, the metal electrode 212 is covered with additional plastic layers 234 laminated onto the upper side of the electrode 212 and onto the lower side of the electrode 212 (not shown) in the region of the end 204 of the pouch 202. Electrode 214 is partially covered by plastic layers 236, accordingly. The pouch 202 has to be welded in welding zones which in this embodiment are elongated and define a longitudinal axis 240 along the rims or ends 204, 206 of the pouch 202 as illustrated by broken lines 242, 244 in Fig. 1 for a welding zone 238 at the rim or end 204. The welding zone 238 may have a width W perpendicular to the longitudinal axis 240. For example, the width W may be a few millimeters, and the length of the welding zone in direction of the longitudinal axis 240 may be several centimeters, e.g. about 20 cm. When welding the pouch 202, the innermost layers 232, 232' have to be welded to one another in regions of the welding zone 238 outside the layers 234, while in the region of the layers 234, the innermost layers 232 and 232' are to be welded to the layers 234 laminated on the electrode 212. A welding zone at the opposite end 206 of the pouch 202 is equal to the welding zone 238 so that a description of that welding zone will be omitted here.

In conventional methods of welding the open end 204 along the welding zone 238 of the pouch 202, heated clamping jaws are used. This means that heat from the heated clamping jaws must be introduced through the outermost layers 220 and 220' to the innermost layers 232' and 232 and the additional layers 234. The heat must also be transmitted through the intermediate metallic layer 228. The maximum allowable temperature of the outermost layers 220, 220' or the outer layers 220 to 226 and 220' to 226' limits the temperature of the clamping jaws and thus the heat introduction, and thereby increases the processing time. In view of the comparably long processing time and different heat capacities of the layers 220 to 232 and 220' to 232', the welding may not be as uniform as desired along the total length of the welding zone 238.

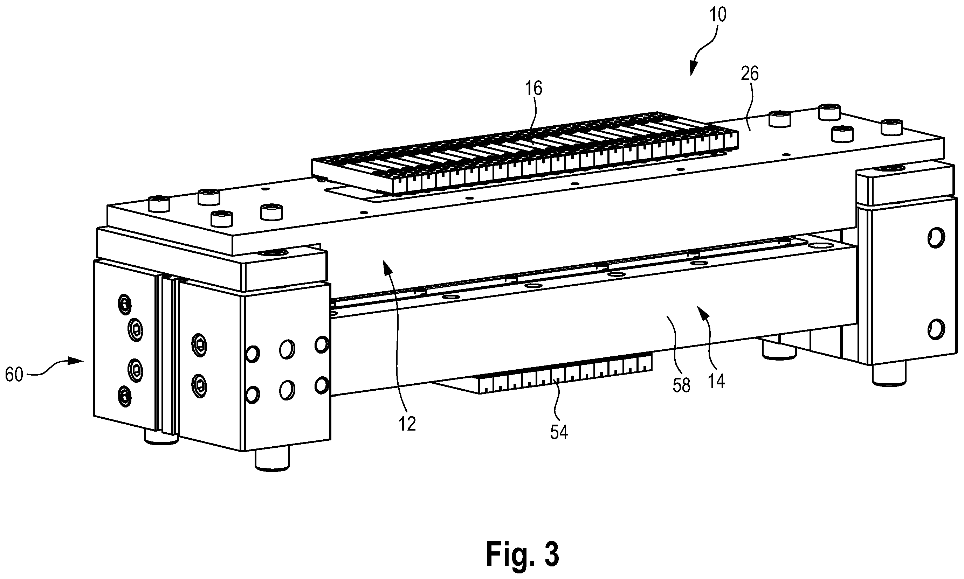

In the following, a laser welding apparatus will be described with reference to Figs. 3 to 11 which overcomes the disadvantages of the prior art.

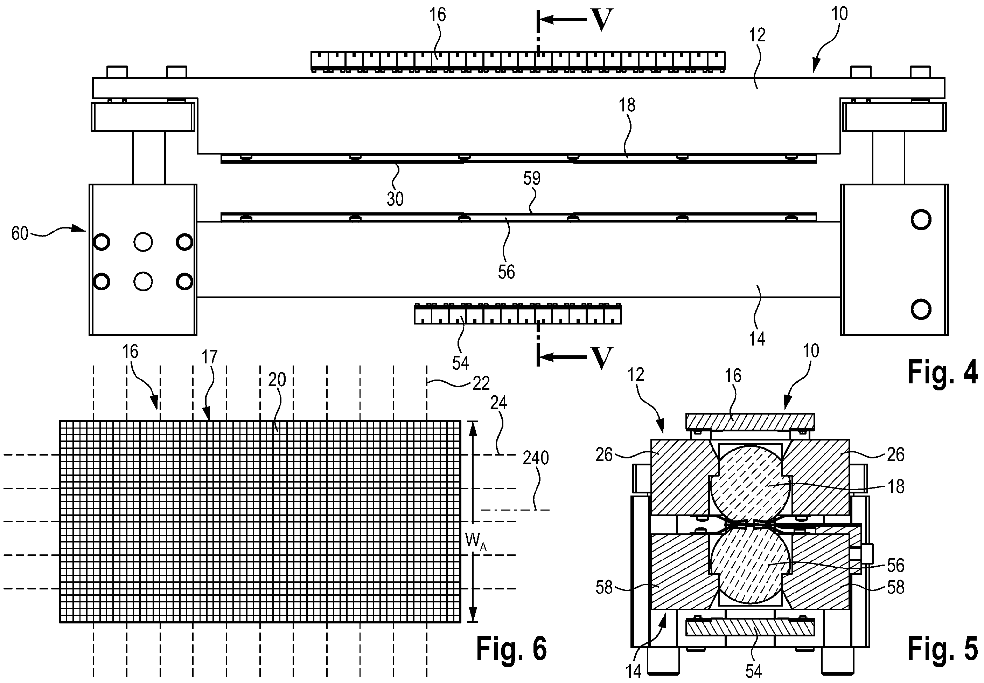

Figs. 3 to 5 show an embodiment of a laser welding apparatus 10 according to the principles of the present invention. The laser welding apparatus 10 comprises a first clamping jaw 12 and a second clamping jaw 14. The first clamping jaw 12 comprises a laser module 16 comprising a preferably two-dimensional array 17 of layer diodes 20 as schematically shown in Fig. 6, wherein each square symbolizes a laser diode. The array 17 may comprise a number of laser diodes in the range from 100 to 100,000 laser diodes. The laser diodes 20 may be vertical cavity surface emitting lasers (VCSELs). The laser diodes 20 of the array 17 may output laser light in the infrared wavelength range from 750 nm to 1,500 nm, e.g. around 980 nm. The laser diode array 17 may output laser light with a power density of one to several hundreds W/cm², e.g. a power density of 100 W/cm².

The laser diodes 20 of the array 17 may be arranged in rows and columns to form a two-dimensional arrangement. The two-dimensional array 17 spans an area which may be larger than the area spanned by the welding zone 238 in Fig. 1. In particular, the width W_{A} of the array 17 perpendicular to the longitudinal axis 240, which is also depicted in Fig. 6, may be larger, e.g. several times larger, e.g. more than 5 or even 10 times larger, than the width W of the welding zone 238. The array 17 may be sub-divided in a plurality of sub-arrays or emission zones in one or both of the two dimensions of the array, as illustrated with broken lines 22 and 24. The sub-arrays of the laser diodes 20 of the array 17 can be individually addressed by a control or driver (not shown) of the laser module 16 to adjust an intensity distribution of emitted laser light along the welding zone 238, as will be further explained below. By individually addressing laser light emission zones along the two-dimensional array 17, the intensity profile of emitted laser light can be tailored in time and spatially and thus precisely controlled along the welding zone 238.

The first clamping jaw 12 further comprises a transparent body 18, which preferably is elongated if the welding zone like welding zone (238) is elongated. The transparent body 18 is mounted in a holding frame or holding body 26 of the first clamping jaw 12. The laser module 16 may also be mounted to the holding body 26 as shown in Fig. 5, for example.

The laser diode array 17 of the laser module 16 is arranged in proximity to the transparent body 18, while a small gap of a few millimeters up to several cm, e.g. 5 cm, is possible. The laser diode array 17 may be protected by a cover glass (not shown) on the light emission side of the laser module 16. The transparent body 18 may be protected by a thin, flexible and transparent separation layer (not shown) on its side facing the second clamping jaw 14. The separation layer may be adapted to avoid that plastic parts of the workpiece stick at the transparent body 18. For example, the separation layer may be a polyamide foil comprising a silicone-based glue for adhering the polyamide foil onto the transparent body 18 and the holding body 26.

The transparent body 18 is transparent to the laser light emitted by the laser diodes 20 of the laser diode array 17, and is arranged to receive and transmit laser light emitted by the laser diode array 17 of the laser module 16 into a workpiece along a welding zone, when the workpiece is arranged between the first and second clamping jaws 12, 14. When the workpiece is the pouch 202 shown in Fig. 1, the transparent body 18 introduces the laser light into the material of the pouch 202 along the welding zone 238.

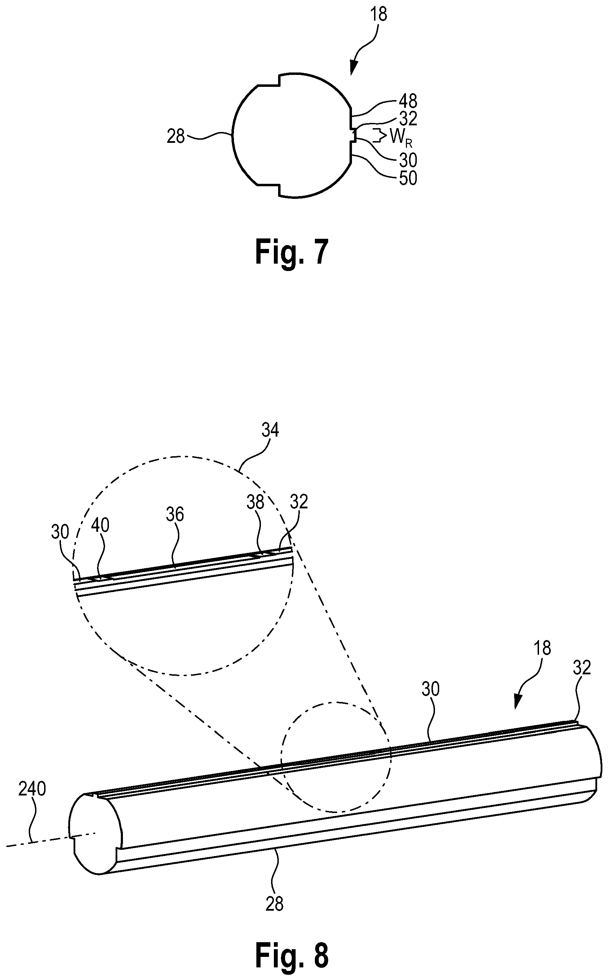

The transparent body 18 may be configured as a substantially cylindrical rod as shown in Figs. 7 and 8. The transparent body 18 may have a length in direction of the longitudinal axis 240 which is adapted to the length of the laser diode array along the longitudinal axis 240. The width or diameter of the transparent body 18 perpendicular to the longitudinal axis 240 may be adapted to the width W_{A} of the laser diode array 17 so as to be principally able to collect light from the entire laser diode array 17, as shown in Fig. 5. The transparent body 18 may be made of a material which is not only transparent to the laser light emitted by the laser diodes 20, but which also is a good heat conductor. In this regard, a suitable material for the transparent body 18 may be sapphire. Instead of being configured as a solid body, the transparent body 18 may be configured as a hollow body. In further embodiments, the transparent body may be configured as a compound parabolic concentrator.

The transparent body 18 has a light entrance side 28 (Fig. 7) along the length of the transparent body 18 through which laser light emitted by the laser diodes 20 of the laser diode array 17 enters the transparent body 18 and emerges from the transparent body 18 at an opposite front surface arranged along the length of the transparent body 18. The front surface is configured as a clamping surface 30 of the transparent body 18 and, thus, of the clamping jaw 12. The clamping surface 30 cooperates with the second clamping jaw 14 (to be described in more detail later) to exert the pressure onto the workpiece necessary in the welding process. In the present embodiment, the clamping surface 30 is provided on a projecting ridge 32 extending along the transparent body 18 in direction of the longitudinal axis 240 (axis 240 in Fig. 1).

The clamping surface 30 of the transparent body 18 may have a contour along a length of the transparent body 18 which comprises different height levels along the length of the clamping surface 30. The contour of the clamping surface 30 is adapted to the surface profile of the work piece along the welding zone. An example of the contour of the clamping surface 30 is shown in the enlarged portion 34 in Fig. 8, wherein the contour comprises a first recess 36 and second recesses 38, 40 which are less deep than the recess 36. The recesses 36, 38 and 40 take account of the surface topology of the pouch 202 along the welding zone 238 in the region of the electrode 212 and the additional layer 234 laminated on the electrode 212, and the regions outside electrode 212 and additional layer 234. Thus, when clamping the pouch 202 in the welding zone 238 between the first and second clamping jaws 12, 14, the pressure exerted onto the welding zone 238 of the pouch 202 is uniformly distributed along the welding zone 238.

In other embodiments, the ridge 32 may be made flexible or resilient so as to adapt itself to the surface contour of the workpiece to be welded.

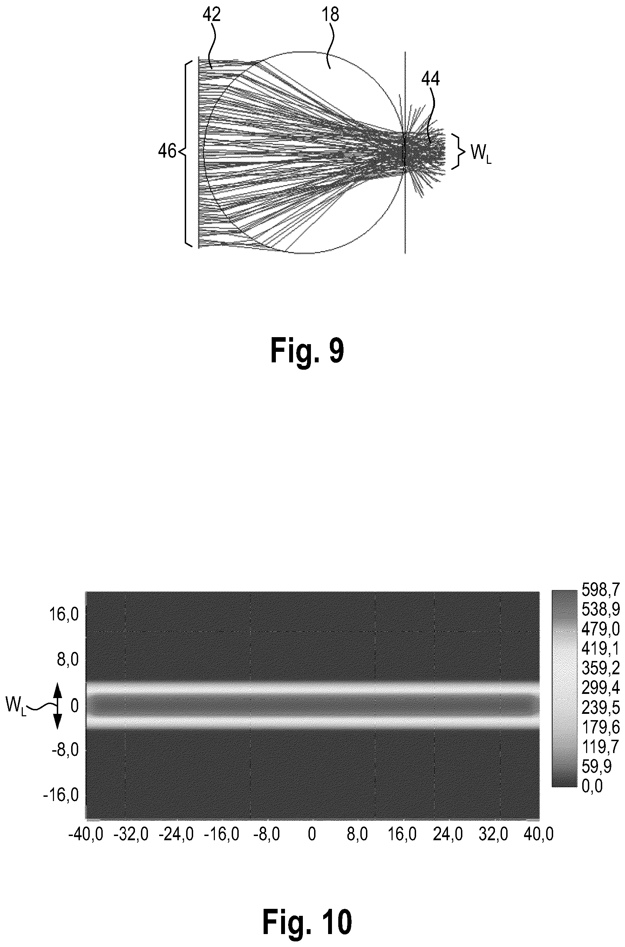

As shown in Fig. 9, the transparent body 18 further has the function to bundle the laser light 42 when propagating from the light entrance side 28 through the transparent body 18 to the clamping surface 30. A laser light bundle 44 emerging from the transparent body 18 has a reduced cross-section perpendicular to the propagation direction of the laser light, here perpendicular to the longitudinal axis of the transparent body 18, in comparison with a cross-section 46 of the laser light bundle 42 incident on the transparent body 18. The cross-section of the laser light bundle 44 has a width W_{L} which equals a width W_{R} of the ridge 32 of the transparent body 18 so that the laser light bundle 44 may substantially fill the ridge 32. The transparent body 18 may have a non-transmissive surface in regions 48, 50 (Fig. 7) immediately adjacent to the clamping surface 30. The opaqueness of the surface regions 48, 50 may be achieved, for example, by a reflective coating on the surface of the transparent body 18 in these regions. Thus, laser light is transmitted from the transparent body 18 into the workpiece only through the clamping surface 30.

Fig. 10 shows the light intensity distribution of the laser light emerging from the transparent body 18 in direction perpendicular to the longitudinal axis 240 (vertical axis) and in direction of the longitudinal axis (length direction of the transparent body 18) (horizontal axis) of the transparent body 18. Fig. 10 shows that the light intensity is very high in a narrow stripe having a width corresponding to the width W_{R} of the clamping surface 30 of the transparent body 18, while the intensity is zero or substantially zero outside the clamping surface 30. The light intensity introduced into the workpiece may thus be sharply limited to the welding zone, like welding zone 238 in Fig. 1.

The holding body 26 may be configured to dissipate heat from the transparent body 18 during use of the laser welding apparatus 10. The transparent body 18 may be heated by the laser light passing through the transparent body 18. A too high temperature of the transparent body 18 may cause the surface of the workpiece to stick to the clamping surface 30 of the transparent body 18. Cooling the transparent body 18 is advantageous as it avoids that the workpiece sticks or adheres to the clamping surface 30. The holding body 26 may be made of a material with high heat conducting capability, in particular a metal. The holding body 26 contacts the transparent body 18 in an area as large as possible, except at the light entrance side 28 and the light exit side comprising the clamping surface, so as to provide a sufficient cooling effect.

As a further cooling mechanism to discharge heat from the transparent body 18, the transparent body 18 may have cooling channels (not shown) for passing a cooling fluid through the transparent body 18, wherein the cooling channels are arranged such that they do not disturb the light transmission through the transparent body.

When the laser welding apparatus 10 is used for welding workpieces which only require energy supply from one side (from an upper side or from a lower side), it is basically sufficient that one of the clamping jaws, e.g. the first clamping jaw 12, has a laser module 16 and a transparent body 18, while the second clamping jaw 14 may be configured in conventional manner, i.e. without a laser module and without a transparent body. However, in some instances, it may be advantageous to supply energy to the workpiece from both sides. For example, when the laser welding apparatus 10 is used for welding the pouch 202 of the pouch cell 200 as shown in Fig. 1, it is advantageous, if the second clamping jaw also has a laser module 54 and a transparent body 56 as shown in Fig. 5. This is because the light intensity needed for welding the pouch 202 in the region of the electrode 212 may be higher than in regions outside the electrode 212 in view of the thermal mass of the electrode 212 and thermal losses caused by the electrode 212 which may dissipate heat away from the welding zone 238. The laser module 54 may have a laser diode array, preferably comprising VCSELs, which may have the same or similar area as the laser diode array 17, or may have a different area. The laser diode array of the laser module 54 may comprise sub-arrays as described with respect to the laser diode array 17.

The second transparent body 56 may be configured in the same way as the transparent body 18. The transparent body 56 may be held in a holding body or frame 58 which is adapted to cool the transparent body 56.

The workpiece to be welded may be arranged and clamped between the clamping surface 30 of the transparent body 18 and a corresponding clamping surface 59 (Fig. 4) of the transparent body 56.

The laser welding apparatus 10 may further comprise a drive 60 to move the first clamping jaw 12 relative to the clamping jaw 14 (or vice versa or both) in order to open the clamping jaws 12, 14 as shown in Fig. 4 for loading a workpiece into the welding apparatus 10, and to close the clamping jaws 12 and 14 as shown in Fig. 3 and 5 to clamp the workpiece between the clamping surfaces of the clamping jaws 12 and 14. The drive is configured to apply a clamping force or pressure onto the workpiece as needed for the welding process.

In an embodiment of a method of laser welding a workpiece, especially a pouch like pouch 202, along a welding zone like welding zone 238 in Fig. 1, the workpiece is arranged between the first and second clamping jaws 12, 14 such that the welding zone 238 is arranged between the clamping surfaces 30 and 59 of the transparent bodies 18, 56. The clamping jaws are then closed. At least a part of the laser diodes 20 of the laser module 16, and if needed, at least a part of the laser diodes of the laser module 54 are switched on to emit laser light, wherein the laser light emitted by the laser module 16 is transmitted through the clamping surface 30 of transparent body 18 into the workpiece. If laser diodes of the laser module 54 are also switched on, laser light emitted by the laser module 54 is transmitted through the clamping surface 59 of transparent body 56 into the workpiece from the opposite side thereof. The time period of laser emission may be very short, for example less than 1 second, less than 100 µs, or less than 50 µs. In case of welding the pouch 202 of the pouch cell 200, the laser light entering the layer structure of the upper side 216 and/or the lower side 218 of the pouch 202 heats up the absorptive layer 228 and/or 228', while a heat transport through the outer layers 220 to 226 and 220' to 226' does not or substantially does not occur. Thus, the outer layers 220 to 226 and 220' to 226' are protected against over-heating. The method according to the principles of the present invention allows a shorter processing time with higher energy densities so that the influence of heat dissipation by varying heat capacities is reduced.

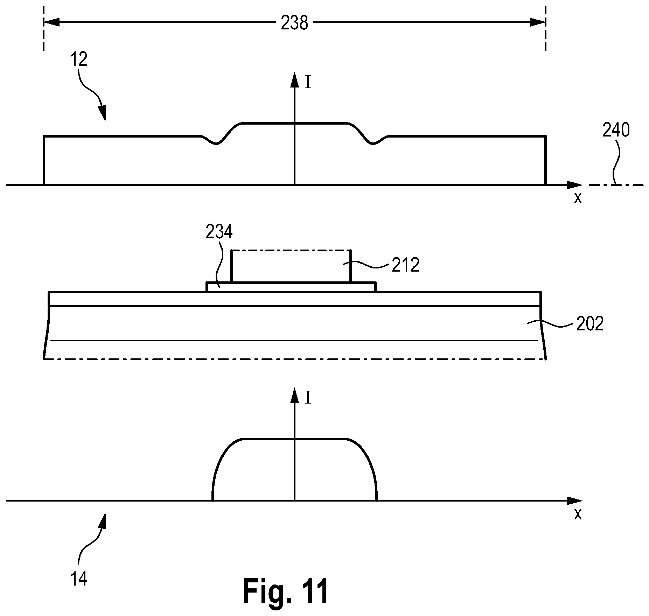

Furthermore, the energy introduction may be profiled over welding zone 238 in time and spatially and may be adapted to the locally present thermal masses and heat losses. Fig. 11 shows an exemplary intensity distribution of intensity I along the length x (along the longitudinal axis (240)) of the welding zone 238. The uppermost diagram shows the length dimension of the welding zone 238. The second diagram shows an intensity distribution provided by the first clamping jaw 12 along the length of the welding zone 238, and the lowermost diagram shows the intensity distribution provided by the second clamping jaw 14. Further, a portion of the pouch 202 with the electrode 212 is shown. As can be seen in Fig. 11, the laser diode array of the first clamping jaw 12 is driven such that laser light is emitted over the entire length of the welding zone 238, with the light intensity varying along the length of the welding zone 238. In a region beginning from the outer edges of the welding zone 238, the light intensity may be uniform up to the edge of the additional layers 234 laminated on both sides of the electrode 212 where the light intensity is slightly reduced such that the heat generated by the intermediate absorptive layer 228 is still sufficient to weld the innermost layer 232 to the additional layer 234, but not too high as to damage the sensible additional layer 234. In the region of the electrode 212, the light intensity is uniform but increased with respect to the light intensity in regions outside the electrode 212 in view of the high thermal mass of and the heat dissipation by the electrode 212 as mentioned above. The light intensity profile can be generated by individually addressing or controlling sub-arrays of the laser module 16 independent from other sub-arrays of the laser module.

The laser module 54 of the second clamping jaw 14 emits light only in the region of the electrode 212 for the reasons above, while the laser module 54 does not or substantially does not emit light in the regions outside the electrode 212. The area of the laser module 54 thus may be configured smaller, i.e. may have a lower number of laser diodes in comparison with the laser module 16.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures can be used to advantage.

Any reference signs in the claims should not be construed as limiting the scope.

## Claims

1. Laser welding apparatus for welding a workpiece (202) in a welding zone (238), comprising
a first clamping jaw (12) comprising an array (17) of laser diodes (20) arranged to emit laser light and a transparent body (18) arranged to receive and transmit the laser light into the workpiece (202), wherein the array (17) of laser diodes (20) is arranged in proximity to the transparent body (18), the transparent body (18) having a clamping surface (30) arranged to come into contact with the workpiece (202), **characterized by**
a second clamping jaw (14) opposite to the first clamping jaw (12) and arranged to clamp the workpiece (202) in cooperation with the clamping surface (30) of the transparent body (18) of the first clamping jaw (12) along the welding zone (238), wherein
the second clamping jaw (14) comprises a further array of laser diodes arranged to emit laser light and a further transparent body (56) arranged to receive and transmit the laser light, wherein the further array of laser diodes is arranged in proximity to the further transparent body (56), wherein the transparent body (18) and the further transparent body (56) are arranged to clamp the workpiece (202) therebetween.

2. Laser welding apparatus according to claim 1, wherein the array is two-dimensional, wherein sub-arrays of the laser diodes (20) are individually addressable to adjust an intensity distribution along the welding zone (238).

3. Laser welding apparatus according to claim 1 or 2, wherein the transparent body (18) is arranged to bundle the laser light passing through the transparent body (18) such that a laser light bundle (44) exiting the transparent body (18) has a reduced area in a cross-section perpendicular to the propagation direction of the laser light, in comparison with a cross-section of the laser light bundle (42) incident on the transparent body (18).

4. Laser welding apparatus according to anyone of claims 1 to 3, wherein the transparent body (18) comprises a projecting ridge (32) having a front surface forming the clamping surface (30) of the transparent body (18).

5. Laser welding apparatus according to anyone of claims 1 to 4, wherein the transparent body (18) has a non-transmissive surface in regions (48, 50) immediately adjacent to the clamping surface (30).

6. Laser welding apparatus according to claim 4 or 5, wherein the clamping surface (30) of the transparent body (18) has a contour along a length of the transparent body (18) which comprises different height levels along the length of the clamping surface (30).

7. Laser welding apparatus of anyone of claims 1 to 6, wherein the first clamping jaw (12) comprises a holding body (26) for holding the transparent body (18), wherein
the holding body (26) is arranged to dissipate heat from the transparent body (18).

8. Laser welding apparatus of anyone of claims 1 to 7, wherein the transparent body (18) is made of a heat conducting material and/or comprises interior channels for receiving a cooling fluid.

9. Laser welding apparatus according to anyone of claims 1 to 8, wherein the welding zone (238) is elongated and is defining a longitudinal axis (240), so that the transparent body is extending along the longitudinal axis and has an elongated shape.

10. Laser welding apparatus according to anyone of claims 1 to 9, wherein the further array of laser diodes of the second clamping jaw is a two-dimensional array, and/or the further transparent body (56) has an elongated shape.

11. Method of laser welding a workpiece (202) in a welding zone (238), comprising:
arranging the workpiece (202) between a first clamping jaw (12) and a second clamping jaw (14), the first clamping jaw (12) comprising a two-dimensional array (17) of laser diodes (20) and a transparent body (18), the transparent body (18) having a clamping surface (30) arranged to come into contact with the workpiece (202), wherein the array (17) of laser diodes (20) is arranged in proximity to the transparent body (18), the second clamping jaw (14) comprising a further array of laser diodes arranged to emit laser light and a further transparent body (56) arranged to receive and transmit the laser light, wherein the further array of laser diodes is arranged in proximity to the further transparent body (56),
clamping the workpiece (202) between the clamping surface (30) of the transparent body (18) of the first clamping jaw (12) and the further transparent body (56) of the second clamping jaw (14) along the welding zone (238),
causing at least a part of the laser diodes (20) to emit laser light and transmitting the laser light through the transparent body (18) along the welding zone (238) into the workpiece (238).

12. Method of claim 11, further comprising controlling the laser diodes (20) to adjust an intensity distribution of the laser light along the welding zone (238).

13. Method of claim 11 or 12, wherein the workpiece (202) comprises a layer structure of laminated layers (220-232, 220'-232') comprising plastic layers transparent to the laser light, and one or more non-transparent layers (228, 228') embedded between the plastic layers.

14. Method of claim 13, further comprising transmitting the laser light from the transparent body (18) through one or more first transparent layers to the non-transparent layer (228, 228') to heat the non-transparent layer (228, 228') and transfer the heat from the non-transparent layer (228, 228') to one or more underlying layers.

15. Method of anyone of claims 11 to 14, wherein the workpiece is a pouch (202) of a pouch cell (200) comprising a metal electrode (212) projecting from a part of a rim (204) of the pouch (202), wherein the welding zone (238) extends along the rim (204) and over the metal electrode (212).

## Patentansprüche

1. Laserschweißeinrichtung zum Schweißen eines Werkstücks (202) in einer Schweißzone (238), umfassend:
eine erste Klemmbacke (12), die ein Array (17) von Laserdioden (20), die dazu angeordnet sind, Laserlicht zu emittieren, und einen lichtdurchlässigen Körper (18), der dazu angeordnet ist, das Laserlicht zu empfangen und in das Werkstück (202) zu übertragen, umfasst, wobei das Array (17) von Laserdioden (20) in der Nähe zu dem lichtdurchlässigen Körper (18) angeordnet ist, wobei der lichtdurchlässige Körper (18) eine Klemmfläche (30) aufweist, die dazu angeordnet ist, in Kontakt mit dem Werkstück (202) zu kommen, **gekennzeichnet durch**
eine zweite Klemmbacke (14), die der ersten Klemmbacke (12) gegenüberliegt und dazu angeordnet ist, das Werkstück (202) in Kooperation mit der Klemmfläche (30) des lichtdurchlässigen Körpers (18) der ersten Klemmbacke (12) entlang der Schweißzone (238) einzuklemmen, wobei
die zweite Klemmbacke (14) ein weiteres Array von Laserdioden, die dazu angeordnet sind, Laserlicht zu emittieren, und einen weiteren lichtdurchlässigen Körper (56), der dazu angeordnet ist, das Laserlicht zu empfangen und zu übertragen, umfasst, wobei das weitere Array von Laserdioden in der Nähe zu dem weiteren lichtdurchlässigen Körper (56) angeordnet ist, wobei der lichtdurchlässige Körper (18) und der weitere lichtdurchlässige Körper (56) dazu angeordnet sind, das Werkstück (202) zwischen denselben einzuklemmen.

2. Laserschweißeinrichtung nach Anspruch 1, wobei das Array zweidimensional ist, wobei Unterarrays der Laserdioden (20) individuell angesteuert werden können, um eine Intensitätsverteilung entlang der Schweißzone (238) anzupassen.

3. Laserschweißeinrichtung nach Anspruch 1 oder 2, wobei der lichtdurchlässige Körper (18) dazu angeordnet ist, das Laserlicht, das durch den lichtdurchlässigen Körper (18) hindurchgelangt, so zu bündeln, dass ein Laserlichtbündel (44), das den lichtdurchlässigen Körper (18) anregt, einen reduzierten Bereich in einem Querschnitt senkrecht zu der Ausbreitungsrichtung des Laserlichts aufweist, im Vergleich zu einem Querschnitt des Laserlichtbündels (42), das auf den lichtdurchlässigen Körper (18) fällt.

4. Laserschweißeinrichtung nach einem der Ansprüche 1 bis 3, wobei der lichtdurchlässige Körper (18) einen hervorstehenden Steg (32) umfasst, der eine Vorderfläche aufweist, die die Klemmfläche (30) des lichtdurchlässigen Körpers (18) ausbildet.

5. Laserschweißeinrichtung nach einem der Ansprüche 1 bis 4, wobei der lichtdurchlässige Körper (18) eine nicht transmissive Fläche in Regionen (48, 50) aufweist, die unmittelbar an die Klemmfläche (30) angrenzen.

6. Laserschweißeinrichtung nach einem der Ansprüche 4 oder 5, wobei die Klemmfläche (30) des lichtdurchlässigen Körpers (18) eine Kontur entlang einer Länge des lichtdurchlässigen Körpers (18) aufweist, die unterschiedliche Höhenniveaus entlang der Länge der Klemmfläche (30) umfasst.

7. Laserschweißeinrichtung nach einem der Ansprüche 1 bis 6, wobei die erste Klemmbacke (12) einen Haltekörper (26) zum Halten des lichtdurchlässigen Körpers (18) umfasst, wobei der Haltekörper (26) dazu angeordnet ist, Wärme von dem lichtdurchlässigen Körper (18) abzuleiten.

8. Laserschweißeinrichtung nach einem der Ansprüche 1 bis 7, wobei der lichtdurchlässige Körper (18) aus einem wärmeleitenden Material hergestellt ist und/oder Innenkanäle zum Empfangen einer Kühlflüssigkeit umfasst.

9. Laserschweißeinrichtung nach einem der Ansprüche 1 bis 8, wobei die Schweißzone (238) länglich ist und eine Längsachse (240) definiert, sodass der lichtdurchlässige Körper sich entlang der Längsachse erstreckt und eine längliche Form aufweist.

10. Laserschweißeinrichtung nach einem der Ansprüche 1 bis 9, wobei das weitere Array von Laserdioden der zweiten Klemmbacke ein zweidimensionales Array ist und/oder der weitere lichtdurchlässige Körper (56) eine längliche Form aufweist.

11. Verfahren zum Laserschweißen eines Werkstücks (202) in einer Schweißzone (238), umfassend:
Anordnen des Werkstücks (202) zwischen einer ersten Klemmbacke (12) und einer zweiten Klemmbacke (14), wobei die erste Klemmbacke (12) ein zweidimensionales Array (17) von Laserdioden (20) und einen lichtdurchlässigen Körper (18) umfasst, wobei der lichtdurchlässige Körper (18) eine Klemmfläche (30) aufweist, die dazu angeordnet ist, in Kontakt mit dem Werkstück (202) zu kommen, wobei das Array (17) von Laserdioden (20) in der Nähe zu dem lichtdurchlässigen Körper (18) angeordnet ist, wobei die zweite Klemmbacke (14) ein weiteres Array von Laserdioden, die dazu angeordnet sind, Laserlicht zu emittieren, und einen weiteren lichtdurchlässigen Körper (56), der dazu angeordnet ist, das Laserlicht zu empfangen und zu übertragen, umfasst, wobei das weitere Array von Laserdioden in der Nähe zu dem weiteren lichtdurchlässigen Körper (56) angeordnet ist,
Einklemmen des Werkstücks (202) zwischen der Klemmfläche (30) des lichtdurchlässigen Körpers (18) der ersten Klemmbacke (12) und dem weiteren lichtdurchlässigen Körper (56) der zweiten Klemmbacke (14) entlang der Schweißzone (238),
Veranlassen, dass mindestens ein Teil der Laserdioden (20) Laserlicht emittiert, und Übertragen des Laserlichts durch den lichtdurchlässigen Körper (18) entlang der Schweißzone (238) in das Werkstück (238).

12. Verfahren nach Anspruch 11, ferner umfassend Steuern der Laserdioden (20), um eine Intensitätsverteilung des Laserlichts entlang der Schweißzone (238) anzupassen.

13. Verfahren nach Anspruch 11 oder 12, wobei das Werkstück (202) eine Schichtstruktur aus laminierten Schichten (220-232, 220'-232') umfasst, die Kunststoffschichten, die für das Laserlicht lichtdurchlässig sind, und eine oder mehrere nicht lichtdurchlässige Schichten (228, 228'), die zwischen den Kunststoffschichten eingebettet sind, umfassen.

14. Verfahren nach Anspruch 13, ferner umfassend Übertragen des Laserlichts von dem lichtdurchlässigen Körper (18) durch eine oder mehrere erste lichtdurchlässige Schichten zu der nicht lichtdurchlässigen Schicht (228, 228'), um die nicht lichtdurchlässige Schicht (228, 228') zu erwärmen und die Wärme von der nicht lichtdurchlässigen Schicht (228, 228') zu einer oder mehreren darunter liegenden Schichten zu transferieren.

15. Verfahren nach einem der Ansprüche 11 bis 14, wobei das Werkstück ein Beutel (202) einer Beutelzelle (200) ist, die eine Metallelektrode (212) umfasst, die von einem Teil eines Rands (204) des Beutels (202) hervorsteht, wobei die Schweißzone (238) sich entlang dem Rand (204) und über die Metallelektrode (212) erstreckt.

## Revendications

1. Appareil de soudage au laser pour le soudage d'une pièce à usiner (202) dans une zone de soudage (238), comprenant :
une première mâchoire de serrage (12) comprenant un réseau (17) de diodes laser (20) conçues pour émettre une lumière laser et un corps transparent (18) conçu pour recevoir et transmettre la lumière laser dans la pièce à usiner (202), dans lequel le réseau (17) de diodes laser (20) est disposé à proximité du corps transparent (18), le corps transparent (18) ayant une surface de serrage (30) conçue pour entrer en contact avec la pièce à usiner (202), **caractérisé par**
une deuxième mâchoire de serrage (14) opposée à la première mâchoire de serrage (12) et conçue pour serrer la pièce à usiner (202) en coopération avec la surface de serrage (30) du corps transparent (18) de la première mâchoire de serrage (12) le long de la zone de soudage (238), dans laquelle
la deuxième mâchoire de serrage (14) comprend un autre réseau de diodes laser conçu pour émettre une lumière laser et un autre corps transparent (56) conçu pour recevoir et transmettre la lumière laser, l'autre réseau de diodes laser étant disposé à proximité de l'autre corps transparent (56), le corps transparent (18) et l'autre corps transparent (56) étant conçus pour serrer la pièce à usiner (202) entre eux.

2. Appareil de soudage au laser selon la revendication 1, dans lequel le réseau est bidimensionnel, les sous-réseaux de diodes laser (20) pouvant être adressés individuellement pour ajuster la distribution de l'intensité le long de la zone de soudage (238).

3. Appareil de soudage au laser selon la revendication 1 ou 2, dans lequel le corps transparent (18) est conçu pour regrouper la lumière laser traversant le corps transparent (18) de telle sorte qu'un faisceau de lumière laser (44) sortant du corps transparent (18) présente une surface réduite dans une section transversale perpendiculaire à la direction de propagation de la lumière laser, par rapport à une section transversale du faisceau de lumière laser (42) incident sur le corps transparent (18).

4. Appareil de soudage au laser selon l'une des revendications 1 à 3, dans lequel le corps transparent (18) comprend une arête en saille (32) dont la surface avant forme la surface de serrage (30) du corps transparent (18).

5. Appareil de soudage au laser selon l'une des revendications 1 à 4, dans lequel le corps transparent (18) présente une surface non transmissive dans les régions (48, 50) immédiatement adjacentes à la surface de serrage (30).

6. Appareil de soudage au laser selon la revendication 4 ou 5, dans lequel la surface de serrage (30) du corps transparent (18) a un contour sur une longueur du corps transparent (18) qui comprend différents niveaux de hauteur tout au long de la longueur de la surface de serrage (30).

7. Appareil de soudage au laser de l'une des revendications 1 à 6, dans lequel la première mâchoire de serrage (12) comprend un corps de maintien (26) pour maintenir le corps transparent (18), dans lequel le corps de maintien (26) est conçu pour dissiper la chaleur du corps transparent (18).

8. Appareil de soudage au laser selon l'une des revendications 1 à 7, dans lequel le corps transparent (18) est constitué d'un matériau conducteur de la chaleur et/ou comprend des canaux intérieurs destinés à recevoir un fluide de refroidissement.

9. Appareil de soudage au laser selon l'une des revendications 1 à 8, dans lequel la zone de soudage (238) est allongée et définit un axe longitudinal (240), de sorte que le corps transparent s'étend le long de l'axe longitudinal et a une forme allongée.

10. Appareil de soudage au laser selon l'une des revendications 1 à 9, dans lequel l'autre réseau de diodes laser de la deuxième mâchoire de serrage est un réseau bidimensionnel, et/ou l'autre corps transparent (56) a une forme allongée.

11. Procédé de soudage au laser d'une pièce à usiner (202) dans une zone de soudage (238), comprenant :
placement de la pièce à usiner (202) entre une première mâchoire de serrage (12) et une deuxième mâchoire de serrage (14), la première mâchoire de serrage (12) comprenant un réseau bidimensionnel (17) de diodes laser (20) et un corps transparent (18), le corps transparent (18) ayant une surface de serrage (30) conçue pour entrer en contact avec la pièce à usiner (202), dans lequel le réseau (17) de diodes laser (20) est disposé à proximité du corps transparent (18), la deuxième mâchoire de serrage (14) comprenant un autre réseau de diodes laser disposé à émettre de la lumière laser et un autre corps transparent (56) disposé à recevoir et à transmettre la lumière laser, dans lequel le réseau supplémentaire de diodes laser est disposé à proximité de l'autre corps transparent (56),
serrage de la pièce à usiner (202) entre la surface de serrage (30) du corps transparent (18) de la première mâchoire de serrage (12) et l'autre corps transparent (56) de la deuxième mâchoire de serrage (14) le long de la zone de soudage (238),
provoquant l'émission d'une lumière laser par au moins une partie des diodes laser (20) et transmettant la lumière laser à travers le corps transparent (18) le long de la zone de soudage (238) dans la pièce à usiner (238).

12. Procédé de la revendication 11, comprenant en outre la commande des diodes laser (20) pour ajuster une distribution d'intensité de la lumière laser le long de la zone de soudage (238).

13. Procédé de la revendication 11 ou 12, dans lequel la pièce à usiner (202) comprend une structure de couches stratifiées (220-232, 220'-232') comprenant des couches de plastique transparentes à la lumière laser, et une ou plusieurs couches non transparentes (228, 228') intégrées entre les couches de plastique.

14. Procédé de la revendication 13, comprenant en outre la transmission de la lumière laser du corps transparent (18) à travers une ou plusieurs premières couches transparentes vers la couche non transparente (228, 228') pour chauffer la couche non transparente (228, 228') et transférer la chaleur de la couche non transparente (228, 228') à une ou plusieurs couches sous-jacentes.

15. Procédé de l'une quelconque des revendications 11 à 14, dans lequel la pièce à usiner est une poche (202) d'une cellule de poche (200) comprenant une électrode métallique (212) faisant saillie d'une partie d'un bord (204) de la poche (202), dans lequel la zone de soudage (238) s'étend le long du bord (204) et au-dessus de l'électrode métallique (212).
